# EUROPÄISCHE PATENTSCHRIFT

(11) **EP 3 688 515 B1**
(45) Veröffentlichungstag und Bekanntmachung des Hinweises auf die Patenterteilung: **10.11.2021**
(21) Anmeldenummer: 18780047.9
(22) Anmeldetag: 24.09.2018
(51) Int. Cl.: G02B 27/01

(54) **VERFAHREN ZUM BETREIBEN EINER AM KOPF TRAGBAREN ELEKTRONISCHEN ANZEIGEEINRICHTUNG UND ANZEIGESYSTEM ZUM ANZEIGEN EINES VIRTUELLEN INHALTS**
METHOD FOR OPERATING A HEAD-MOUNTED ELECTRONIC DISPLAY DEVICE, AND DISPLAY SYSTEM FOR DISPLAYING A VIRTUAL CONTENT
PROCÉDÉ POUR FAIRE FONCTIONNER UN DISPOSITIF D'AFFICHAGE ÉLECTRONIQUE POUVANT ÊTRE PORTÉ SUR LA TÊTE ET SYSTÈME D'AFFICHAGE POUR L'AFFICHAGE D'UN CONTENU VIRTUEL

(30) Priorität: 26.09.2017 DE 102017217027
(43) Veröffentlichungstag der Anmeldung: 05.08.2020
(73) Patentinhaber: Audi AG, 85045 Ingolstadt (DE)
(72) Erfinder: KÜHNE, Marcus, 92339 Beilngries (DE); PROFENDINER, Daniel, 85049 Ingolstadt (DE)
(86) Internationale Anmeldenummer: PCT/EP2018/075776
(87) Internationale Veröffentlichungsnummer: WO 2019/063475

(56) Entgegenhaltungen:
- EP-A1- 1 510 849
- EP-A1- 2 933 707
- GB-A- 2 347 573
- US-A1- 2016 364 008
- US-B1- 9 459 692

## Beschreibung

Die Erfindung betrifft ein Verfahren zum Betreiben einer am Kopf tragbaren elektronischen Anzeigeeinrichtung und ein Anzeigesystem zum Anzeigen eines virtuellen Inhalts der in den Oberbegriffen der unabhängigen Patentansprüche angegebenen Art.

Zukünftig werden voraussichtlich immer mehr Menschen immersive Technologien in ihren Fahrzeugen nutzen, sei es zur Unterstützung während der Wahrnehmung der Fahraufgabe oder auch zur Unterhaltung beziehungsweise Entspannung während der Fahrt. Dabei wäre es von Vorteil, wenn die mittels einer am Kopf tragbaren elektronischen Anzeigeeinrichtung im Fahrzeug dargestellten virtuellen Inhalte an eine Eigenbewegung des Trägers der elektronischen Anzeigeeinrichtung erfolgt. Dafür ist ein so genanntes Positional Tracking erforderlich, mittels welchem die Relativbewegungen der am Kopf tragbaren elektronischen Anzeigeeinrichtung zur Umgebung erfasst werden.

Zunehmend erfolgt dabei ein so genanntes Inside-Out-Tracking zur Erfassung von Bewegungen solcher elektronischen Anzeigeeinrichtungen. Bei dem Inside-Out-Tracking erfolgt die Erfassung von Bewegungen solcher elektronischen Anzeigeeinrichtungen dadurch, dass eine Erfassungseinrichtung an der elektronischen Anzeigeeinrichtung selbst angebracht wird, wobei die Erfassungseinrichtung dazu ausgelegt ist, eine Umgebung der am Kopf tragbaren elektronischen Anzeigeeinrichtung zu erfassen und dadurch auf Bewegungen der elektronischen Anzeigeeinrichtung relativ zur Umgebung zu Schließen. Die Verwendung derartiger Inside-Out-Tracking-Methoden ist insbesondere innerhalb von sich fortbewegenden Fahrzeugen problematisch. Sitzt beispielsweise ein Träger einer elektronischen Anzeigeeinrichtung in einem fahrenden Kraftfahrzeug, so ziehen von dem Fahrzeuginnenraum aus betrachtet verschiedenste Gegenstände wie zum Beispiel Bäume, andere Verkehrsteilnehmer und dergleichen, an Fenstern des Fahrzeugs vorbei. Bei einem herkömmlichen Inside-Out-Tracking würden diese Objekte ebenfalls mit erfasst werden. Fälschlicherweise würden Relativbewegungen der elektronischen Anzeigeeinrichtung zu den außerhalb vom Kraftfahrzeug befindlichen Objekten bei einer entsprechenden Anpassung einer virtuellen Perspektive auf einen angezeigten virtuellen Inhalten berücksichtigt werden. An sich möchte ein Träger einer solchen elektronischen Anzeigeeinrichtung meistens aber nur, dass beispielsweise seine Kopfbewegungen 1:1 z.B. in einer virtuellen Umgebung umgesetzt werden. Sitzt der Träger in einem fahrenden Fahrzeug, soll sollte nur berücksichtigt werden, wie der Träger seinen Kopf relativ zum Fahrzeug und nicht relativ zur Außenumgebung bewegt. Geschieht letzteres doch, werden falsche Kopfbewegungen angenommen und bei der Darstellung von virtuellen Inhalten falsch umgesetzt.

Die US 9 459 692 B1 beschreibt ein Virtual-Reality-Headset, welches während der Fahrt mit einem Fahrzeug betrieben werden kann, wobei das eingangs geschilderte Problem dadurch behoben wird, dass mittels einer als Erfassungseinrichtung dienenden und an dem Headset angebrachten Kamera eine Reihe von Bildern aufgezeichnet und die Bildfolge analysiert wird. Auf diese Weise soll ermittelt werden können, inwiefern ein Träger des Virtual-Reality-Headsets seinen Kopf relativ zu einem Fahrzeuginnenraum des Fahrzeugs bewegt. Alternativ oder zusätzlich ist es vorgesehen, die mittels der als Erfassungseinrichtung dienenden Kamera aufgezeichneten Bilder mit einem Referenzbild des Fahrzeuginnenraums zu vergleichen, um so herauszufiltern, inwiefern das Virtual-Reality-Headset nur gegenüber dem Fahrzeuginnenraum und nicht relativ zu außerhalb des Fahrzeug liegenden Objekten bewegt wird.

Die WO 2017/031273 A1 beschreibt ein Verfahren zum Betreiben einer Virtual-Reality-Brille während der Fahrt mit einem Fahrzeug. Um besonders zuverlässig erfassen zu können, inwiefern die Virtual-Reality-Brille relativ zum Fahrzeuginnenraum bewegt wird, ist es vorgesehen, eine Fahrzeugsensorik zu verwenden, welche Daten bezüglich der Bewegung des Fahrzeugs liefert. Mittels der Virtual-Reality-Brille erfasste Bewegungen werden mit den die Fahrzeugbewegung charakterisierenden Daten abgeglichen, um dann darauf schließen zu können, inwiefern die Virtual-Reality-Brille relativ zum Fahrzeuginnenraum bewegt wird.

Zudem beschreibt die WO 2010/004547 A1 ein Verfahren zum Anpassen von virtuellen Inhalten während der Fahrt mit einem Fahrzeug. Mehrere Sensoren detektieren dabei die Bewegung des Fahrzeugs, wobei die angezeigten virtuellen Inhalte entsprechend der erfassten Bewegung angepasst werden.

Es ist die Aufgabe der vorliegenden Erfindung, ein Verfahren sowie ein System bereitzustellen, mittels welchen auf besonders einfache und zuverlässige Weise eine Relativbewegung einer elektronischen Anzeigeeinrichtung gegenüber einem Fahrzeuginnenraum ermittelbar ist.

Diese Aufgabe wird durch ein Verfahren zum Betreiben einer am Kopf tragbaren elektronischen Anzeigeeinrichtung sowie durch ein Anzeigesystem zum Anzeigen eines virtuellen Inhalts mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Betreiben einer am Kopf tragbaren elektronischen Anzeigeeinrichtung wird mittels einer an der elektronischen Anzeigeeinrichtung angeordneten Erfassungseinrichtung eine Relativbewegung der elektronischen Anzeigeeinrichtung zu einem Fahrzeuginnenraum eines Fahrzeugs ermittelt und entsprechend der ermittelten Relativbewegung eine virtuelle Perspektive eines Trägers der elektronischen Anzeigeeinrichtung auf einen virtuellen Inhalt angepasst. Um aus einer Relativbewegung des Fahrzeugs zur Fahrzeugumgebung resultierende Verfälschungen hinsichtlich der erfassten Relativbewegung der elektronischen Anzeigeeinrichtung zum Fahrzeug zu eliminieren, ist es erfindungsgemäß vorgesehen, einen Erfassungsbereich der Erfassungseinrichtung auf den Fahrzeuginnenraum zu begrenzen.

Bei dem erfindungsgemäßen Verfahren ist es also im Vergleich zu den eingangs erwähnten Vorgehensweisen nicht notwendig, beispielsweise auf aufwändige Weise Sensordaten, welche die Bewegung des Fahrzeugs charakterisieren mit Sensordaten der an der Anzeigeeinrichtung angebrachten Erfassungseinrichtung abzugleichen, um zuverlässig bestimmen zu können, inwiefern die elektronische Anzeigeeinrichtung relativ zum Fahrzeuginnenraum des Fahrzeugs bewegt wird. Zudem ist es auch nicht erforderlich, die mittels der Erfassungseinrichtung erfassten Sensordaten mit einem hinterlegten Referenzmodell des Fahrzeuginnenraums abzugleichen.

Stattdessen ist erfindungsgemäß vorgesehen, den Erfassungsbereich der Erfassungseinrichtung auf den Fahrzeuginnenraum zu begrenzen. Dadurch kann die Erfassungseinrichtung lediglich den Fahrzeuginnenraum detektieren und somit auch nur Relativbewegungen der elektronischen Anzeigeeinrichtung gegenüber dem Fahrzeuginnenraum detektieren. Bei dem erfindungsgemäßen Verfahren ist es schlichtweg nicht möglich, dass die Erfassungseinrichtung Relativbewegungen gegenüber dem Außenraum des Fahrzeugs detektiert. Selbst wenn beispielsweise an einem Seitenfenster des Fahrzeugs eine Fahrzeugumgebung vorbeiziehen sollte oder auch beispielsweise andere Verkehrsteilnehmer vorbeifahren sollten, so kann dies die Erfassungseinrichtung überhaupt nicht detektieren, da der Erfassungsbereich der Erfassungseinrichtung auf den Fahrzeuginnenraum begrenzt wird.

Folglich wird auch zuverlässig immer nur die Relativbewegung der elektronischen Anzeigeeinrichtung gegenüber dem Fahrzeuginnenraum und nicht gegenüber dem Fahrzeugaußenraum detektiert. Dadurch ist es möglich, die virtuelle Perspektive des Trägers der elektronischen Anzeigeeinrichtung auch immer entsprechend der erfassten Kopfbewegung, welche von der erfassten Relativbewegung der elektronischen Anzeigeeinrichtung gegenüber dem Fahrzeuginnenraum abhängt, anzupassen.

Das erfindungsgemäße Verfahren ist insbesondere dann vorteilhaft, wenn das Fahrzeug sich fortbewegt. Allerdings kann das erfindungsgemäße Verfahren auch besonders vorteilhaft bei stehendem Fahrzeug zum Tragen kommen, beispielsweise wenn das Fahrzeug an einer viel befahrenen Straße steht und eine Vielzahl von anderen Fahrzeugen am geparkten Fahrzeug, in dem der Träger der elektronischen Anzeigeeinrichtung sitzt, vorbeifahren. Auch in dem Fall kann zuverlässig verhindert werden, dass die an der elektronischen Anzeigeeinrichtung angeordnete Erfassungseinrichtung die vorbeifahrenden Fahrzeuge detektiert und infolgedessen falsche Informationen bezüglich der Relativbewegungen der elektronischen Anzeigeeinrichtung ausgibt.

Bei dem erfindungsgemäßen Verfahren werden also außen liegende Bewegungen, also Bewegungen außerhalb des Fahrzeugs, ignoriert. Bei dem virtuellen Inhalt kann es sich um beliebige virtuelle Inhalte handeln. Dabei kann eine virtuelle Umgebung angezeigt werden, in welche der Träger der elektronischen Anzeigeeinrichtung vollständig eintaucht. Alternativ ist es aber auch möglich, dass virtuelle Inhalte zur Erweiterung der Realität angezeigt werden. So oder so wird entsprechend der korrekt ermittelten Relativbewegung der elektronischen Anzeigeeinrichtung gegenüber dem Fahrzeuginnenraum die virtuelle Perspektive des Trägers der elektronischen Anzeigeeinrichtung zuverlässig angepasst.

Gemäß der Erfindung erfolgt die Begrenzung, indem ein Sensor der Erfassungseinrichtung verwendet wird, dessen Reichweite bauartbedingt auf den Fahrzeuginnenraum begrenzt ist. Beispielsweise kann ein Ultraschallsensor verwendet werden, welcher schlichtweg nur eine solche Reichweite aufweist, dass nur der Fahrzeuginnenraum erfasst werden kann. Auch können beliebige andere Sensoren der Erfassungseinrichtung verwendet werden, deren Reichweite auf den Fahrzeuginnenraum bauartbedingt begrenzt ist.

Gemäß einer weiteren vorteilhaften Ausführungsform der Erfindung ist es vorgesehen, dass die Begrenzung erfolgt, indem ein Sensor der Erfassungseinrichtung verwendet wird, dessen Reichweite auf den Fahrzeuginnenraum begrenzt wird. Dies bedeutet, dass der Sensor nicht zwangsläufig nur eine Reichweite aufweist, der auf den Fahrzeuginnenraum beschränkt ist. Jedoch ist der Sensor im Hinblick auf seine Reichweite und somit auf seinen Erfassungsraum variabel einstellbar. Die Begrenzung erfolgt dann dadurch, dass bei dem besagten Sensor die Reichweite einfach auf den Fahrzeuginnenraum begrenzt wird. Wird die elektronische Anzeigeeinrichtung im Fahrzeuginnenraum verwendet, so kann der Sensor also auch nur den Fahrzeuginnenraum detektieren. Wird die Anzeigeeinrichtung hingegen außerhalb vom Fahrzeug verwendet, so kann der Sensor mit der variabel einstellbaren Erfassungsreichweite beziehungsweise mit dem variabel einstellbaren Erfassungsraum auch dazu verwendet werden, relativ weit entfernte Bereiche einer Umgebung zu erfassen.

Alternativ oder ergänzend erfolgt die Begrenzung gemäß der Erfindung, indem eine Kamera der Erfassungseinrichtung verwendet und dabei ein außerhalb des Fahrzeuginnenraums liegender Bereich unscharf gestellt wird. Beispielsweise kann die Kamera ein Objektiv umfassen, mittels welchem ab einer bestimmten Entfernung die Umgebung unscharf gestellt werden kann. Dadurch ist es auf einfache Weise möglich, auch bei der Verwendung einer Kamera als Teil der Erfassungseinrichtung nur den Fahrzeuginnenraum zu erfassen.

Gemäß einer weiteren vorteilhaften Ausführungsform der Erfindung ist es vorgesehen, dass mittels der elektronischen Anzeigeeinrichtung erfasst wird, ob das Fahrzeug sich fortbewegt, wobei in dem Fall der Erfassungsbereich der Erfassungseinrichtung auf den Fahrzeuginnenraum begrenzt wird. Sobald also die elektronische Anzeigeeinrichtung detektiert, dass sich das Fahrzeug fortbewegt, wird der Erfassungsbereich auf dem Fahrzeuginnenraum begrenzt. Ohne Zutun des Trägers der elektronischen Anzeigeeinrichtung kann dadurch also sichergestellt werden, dass seine Kopfbewegungen relativ zum Fahrzeuginnenraum automatisch auch korrekt in eine entsprechende Anpassung der virtuellen Perspektive umgesetzt werden.

Eine weitere vorteilhafte Ausführungsform der Erfindung sieht vor, dass der Erfassungsbereich der Erfassungseinrichtung auf den Fahrzeuginnenraum begrenzt wird, sobald eine vorgegebene Benutzereingabe erfasst worden ist. Es ist also auch möglich, dass beispielsweise der Träger der elektronischen Anzeigeeinrichtung manuell vorgeben kann, dass der Erfassungsbereich auf den Fahrzeuginnenraum begrenzt werden soll. Dadurch kann auf einfache Weise sichergestellt werden, dass der Träger der elektronischen Anzeigeeinrichtung einfach vorgibt, wann der Erfassungsbereich auf den Fahrzeuginnenraum zu begrenzen ist. Beispielsweise können - unabhängig davon - unter welchen Bedingungen die Begrenzung des Erfassungsbereichs erfolgt, auch Daten bereitgestellt werden, welche die Abmaße des Fahrzeugsinnenraums beschreiben. Anhand dieser Daten kann die Begrenzung des Erfassungsbereichs passgenau eingestellt werden. Zudem kann auch die Position der Erfassungseinrichtung mittels geeigneter Sensoren ermittelt werden, wobei in Abhängigkeit von der aktuellen Position der Erfassungseinrichtung innerhalb des Fahrzeuginnenraums in Kenntnis der Abmaße des Fahrzeugsinnenraums die passgenaue Einschränkung bzw. Begrenzung des Erfassungsbereichs vorgenommen werden kann.

Gemäß einer weiteren vorteilhaften Ausführungsform der Erfindung ist es vorgesehen, dass der Erfassungsbereich der Erfassungseinrichtung auf den Fahrzeuginnenraum begrenzt wird, sobald mittels der elektronischen Anzeigeeinrichtung eine Applikation ausgeführt wird, welche auf eine Verwendung im Fahrzeug beschränkt ist. Beispielsweise kann die elektronische Anzeigeeinrichtung eine Autokino-Applikation ausführen, welche auf eine Verwendung im Fahrzeug beschränkt ist. Sobald eine solche Applikation ausgeführt wird, wird automatisch der Erfassungsbereich der Erfassungseinrichtung auf den Fahrzeuginnenraum begrenzt. Sobald also Applikationen mittels der elektronischen Anzeigeeinrichtung ausgeführt werden, welche auf die Verwendung im Fahrzeug beschränkt sind und daher auch nur im Fahrzeug benutzt werden, erfolgt eine automatische Anpassung des Erfassungsbereich der Erfassungseinrichtung.

In weiterer vorteilhafte Ausgestaltung der Erfindung ist es vorgesehen, dass mittels der elektronischen Anzeigeeinrichtung erfasst wird, ob sich die elektronische Anzeigeeinrichtung im Fahrzeuginnraum befindet, wobei in dem Fall der Erfassungsbereich der Erfassungseinrichtung auf den Fahrzeuginnenraum begrenzt wird. Beispielsweise kann an der elektronischen Anzeigeeinrichtung ein RFID-Transponder angebracht sein, wobei fahrzeugseitig dieser Transponder detektiert werden kann oder umgekehrt die elektronische Anzeigeeinrichtung selbst detektieren kann, ob sie sich innerhalb des Fahrzeugs befindet. In letzterem Fall kann beispielsweise auch ein RFID-Transponder fahrzeugseitig angeordnet sein, den die elektronische Anzeigeeinrichtung detektieren kann. Die automatische Anpassung des Erfassungsbereichs beziehungsweise Beschränkung des Erfassungsbereichs auf den Fahrzeuginnenraum sobald sich die elektronische Anzeigeeinrichtung im Fahrzeuginnenraum befindet, bringt den Vorteil mit sich, dass selbst bei stehendem Fahrzeug sich am Fahrzeug vorbei bewegende Verkehrsteilnehmer nicht zur Verfälschung der Erfassung der Relativbewegung der elektronischen Anzeigeeinrichtung zum Fahrzeuginnenraum beitragen.

Eine weitere vorteilhafte Ausführungsform der Erfindung sieht vor, dass die Begrenzung des Erfassungsbereichs der Erfassungseinrichtung auf den Fahrzeuginnenraum nur dann erfolgt, wenn die Anzeigeeinrichtung in einem ersten Modus betrieben wird, wobei wenn die Anzeigeeinrichtung in einem zweiten Modus betrieben wird, zur zusätzlichen Erfassung einer Relativbewegung der elektronischen Anzeigeeinrichtung zur Fahrzeugumgebung der Erfassungsbereich der Erfassungseinrichtung über den Fahrzeuginnenraum hinaus ausgeweitet und die virtuelle Perspektive des Trägers der elektronischen Anzeigeeinrichtung auf den virtuellen Inhalt entsprechend der ermittelten Relativbewegung zum Fahrzeuginnenraum und zur Fahrzeugumgebung angepasst wird. Je nach wiedergegebener Applikation mittels der Anzeigeeinrichtung bzw. je nach wiedergegebenem virtuellen Inhalt mittels der Anzeigeeinrichtung, kann es sinnvoll sein, die Relativbewegung der Anzeigeeinrichtung sowohl zum Fahrzeuginnenraum als auch zur Fahrzeugumgebung zu erfassen und die virtuelle Perspektive entsprechend der ermittelten Relativbewegung zum Fahrzeuginnenraum sowie zur Fahrzeugumgebung anzupassen. Dies könnte beispielsweise der Fall sein, wenn mittels der Anzeigeeinrichtung ein virtuelles Autorennen wiedergegeben wird, bei welchem der Träger der Anzeigeeinrichtung virtuell gegen anderen Personen fährt, die in anderen Fahrzeugen unterwegs sind. Fahren in dem Fall die jeweiligen realen Fahrzeuge nebeneinander her, z.B. aufgrund eines realen Überholvorgangs, wird im zweiten Modus auch die Relativbewegung zur Fahrzeugumgebung und somit zum anderen Fahrzeug mit erfasst. So kann die reale Relativbewegung der realen Fahrzeuge in virtuelle Relativbewegungen umgesetzt werden. Bei virtuellen Autorennen überholt dann das eine virtuelle Auto das andere virtuelle Auto entsprechend des realen Überholvorgangs. Beispielsweise könnte auch ein virtueller Flug wiedergegeben werden. In dem Fall könnte die Anzeigeeinrichtung ebenfalls im zweiten Modus betrieben werden, um Relativbewegungen zur Fahrzeugumgebung zu erfassen. So kann eine virtuelle Landschaft beim virtuellen Flug z.B. so aus der virtuellen Perspektive des Trägers der Anzeigeeinrichtung an ihm vorbeiziehen, wie die reale Landschaft am Träger vorbeizieht. Dafür ist es erforderlich, die Relativbewegung zur Fahrzeugumgebung ebenfalls noch zu erfassen. Schwenkt der Träger der Anzeigeeinrichtung seinen Kopf z.B. nach rechts, so wird diese Relativbewegung zum Fahrzeuginnenraum erfasst und z.B. in einer entsprechende Relativbewegung zu einem virtuellen Cockpit mit einer entsprechenden Veränderung der virtuellen Perspektive umgesetzt. Dabei verändert sich die virtuelle Perspektive aus dem virtuellen Cockpit heraus auf die virtuelle Landschaft zudem so, wie die reale Landschaft am realen Fahrzeug vorbeizieht. Möchte der Träger der Anzeigeeinrichtung hingegen z.B. mit einer in einem Fahrzeug sitzenden Person in einem virtuellen Meetingraum interagieren, ist der erste Modus besser als der zweite Modus geeignet. In dem Fall kann es für die Darstellung innerhalb des virtuellen Meetingraums ausschließlich relevant sein, wie sich der Träger relativ zum Fahrzeuginnenraum bewegt, um diese Relativbewegung in entsprechende virtuelle Perspektivänderungen umzusetzen. Die zusätzliche Erfassung von Relativbewegungen zur Fahrzeugumgebung mit einer entsprechenden Umsetzung innerhalb des virtuellen Meetingsraums wäre nur hinderlich. Je nachdem, ob die Anzeigeeinrichtung im ersten oder zweiten Modus betrieben wird, wird also der Erfassungsbereich der Erfassungseinrichtung angepasst und damit auch die jeweilige Anpassung der virtuellen Perspektive.

In weiterer vorteilhafter Ausgestaltung der Erfindung ist es vorgesehen, dass der Erfassungsbereich der Erfassungseinrichtung über den Fahrzeuginnenraum hinaus ausgeweitet wird, sobald eine vorgegeben Benutzereingabe erfasst worden ist, welche eine Aktivierung des zweiten Modus bewirkt. Es ist also möglich, dass beispielsweise der Träger der elektronischen Anzeigeeinrichtung manuell vorgeben kann, dass der Erfassungsbereich über den Fahrzeuginnenraum hinaus ausgeweitet werden soll. Dadurch kann auf einfache Weise sichergestellt werden, dass beispielsweise der Träger der elektronischen Anzeigeeinrichtung einfach vorgeben kann, wann der Erfassungsbereich nicht mehr nur auf den Fahrzeuginnenraum zu begrenzen ist.

Eine weitere vorteilhafte Ausführungsform der Erfindung sieht vor, dass der erste Modus automatisch aktiviert wird, wenn eine Applikation mittels der elektronischen Anzeigeeinrichtung ausgeführt wird, bei welcher ausschließlich eine Erfassung der Relativbewegung der elektronischen Anzeigeeinrichtung zum Fahrzeuginnenraum erforderlich ist. Wird z.B. die bereits erwähnte Autokino-Applikation mittels der Anzeigeeinrichtung wiedergegeben, soll der Träger der Anzeigeeinrichtung sich möglichst realistisch anmutend in einem Autokino wiederfinden. Dreht er also seinen Kopf hin und her oder lehnt sich vor oder zurück, sollte sich seine virtuelle Perspektive auf eine virtuelle Autokinoleinwand auf einen virtuellen Fahrzeuginnenraum entsprechend verändern. In solch einem Fall wäre es für die realistische Wiedergabe der Autokino-Applikation schlecht, wenn auch noch Relativbewegungen der Anzeigeeinrichtung - und somit des Trägers - zur Fahrzeugumgebung mit erfasst und bei der Anpassung der virtuellen Perspektive berücksichtigt würden. Denn im Fall der Autokinoapplikation sollte ausschließlich der reale Fahrzeuginnenraum als Bezugssystem dienen, gegenüber welchem Relativbewegungen erfasst und in entsprechende Anpassungen der virtuellen Perspektive umgesetzt werden.

Gemäß einer weiteren vorteilhaften Ausführungsform der Erfindung ist es vorgesehen, dass der zweite Modus automatisch aktiviert wird, wenn eine Applikation mittels der elektronischen Anzeigeeinrichtung ausgeführt wird, bei welcher sowohl eine Erfassung der Relativbewegung der elektronischen Anzeigeeinrichtung zum Fahrzeuginnenraum als auch zur Fahrzeugumgebung erforderlich ist. Wird als Applikation beispielsweise das bereits erwähnte virtuelle Autorennen wiedergegeben, bei welchem der Träger Anzeigeeinrichtung gegen andere Fahrzeuginsassen in anderen Fahrzeugen das virtuelle Autorennen fährt, kann es wichtig sein, auch zu erfassen, wie sich die realen Fahrzeuge zueinander bewegen, um dies dann im virtuellen Autorennen umzusetzen. So können z.B. in der Realität stattfindende Überholmanöver durch entsprechende Erfassung der Relativbewegungen sowohl zum Fahrzeuginnenraum als auch zur Fahrzeugumgebung - und damit auch zu anderen Fahrzeugen - ermitteln und in einer virtuellen Umgebung des virtuellen Autorennens umgesetzt werden.

Das erfindungsgemäße Anzeigesystem zum Anzeigen eines virtuellen Inhalts umfasst eine am Kopf tragbare elektronische Anzeigeeinrichtung, eine an der elektronischen Anzeigeeinrichtung angeordnete Erfassungseinrichtung, welche dazu ausgelegt ist, eine Relativbewegung der elektronischen Anzeigeeinrichtung zu einem Fahrzeuginnenraum eines Fahrzeugs zu ermitteln, und eine Steuereinrichtung, welche dazu eingerichtet ist, entsprechend der ermittelten Relativbewegung eine virtuelle Perspektive der elektronischen Anzeigeeinrichtung auf einen virtuellen Inhalt anzupassen, wobei die Steuereinrichtung dazu eingerichtet ist, einen Erfassungsbereich der Erfassungseinrichtung auf den Fahrzeuginnenraum zu begrenzen, um aus einer Relativbewegung des Fahrzeugs zur Fahrzeugumgebung resultierende Verfälschungen hinsichtlich der Erfassung der Relativbewegung der elektronischen Anzeigeeinrichtung zum Fahrzeuginnenraum zu eliminieren. Vorteilhafte Ausgestaltungen des erfindungsgemäßen Verfahrens sind als vorteilhafte Ausgestaltungen des erfindungsgemäßen Anzeigesystems und umgekehrt anzusehen, wobei das Anzeigesystem insbesondere Mittel zur Durchführung der Verfahrensschritte aufweist. Bei der elektronischen Anzeigeeinrichtung handelt es sich vorzugsweise um eine Virtual-Reality-Brille oder um eine Augmented-Reality-Brille.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Anzeigesystems zum Anzeigen eines virtuellen Inhalts, wobei das Anzeigesystem eine Virtual-Reality-Brille zum Anzeigen des virtuellen Inhalts aufweist; und in
- Fig. 2: eine schematische Seitenansicht eines Kraftfahrzeugs, in welchem ein Träger der Virtual-Reality-Brille sitzt.

In den Figuren sind funktionsgleiche Elemente jeweils mit denselben Bezugszeichen versehen worden.

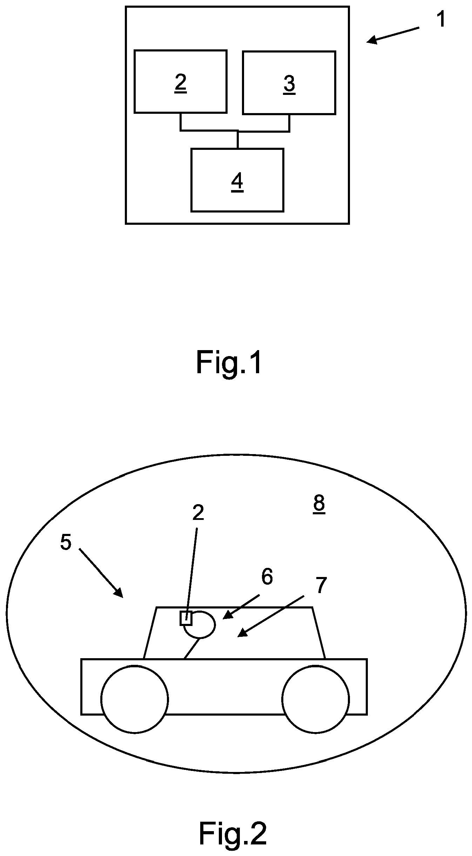

Ein Anzeigesystem 1 zum Anzeigen eines virtuellen Inhalts ist in einer schematischen Darstellung in Fig. 1 gezeigt. Das Anzeigesystem 1 umfasst eine am Kopf tragbare elektronische Anzeigeeinrichtung in Form einer Virtual-Reality-Brille 2 und eine an der Virtual-Reality-Brille 2 angeordnete Erfassungseinrichtung 3, welche dazu ausgelegt ist, eine Relativbewegung der Virtual-Reality-Brille 2 zu einem hier nicht dargestellten Fahrzeuginnenraum eines ebenfalls nicht dargestellten Fahrzeugs zu ermitteln. Des Weiteren weist das Anzeigesystem 1 noch eine Steuereinrichtung 4 auf, welche dazu eingerichtet ist, entsprechend der ermittelten Relativbewegung eine virtuelle Perspektive eines Trägers der Virtual-Reality-Brille 2 auf den virtuellen Inhalt anzupassen. Die Virtual-Reality-Brille 2 kann in einem ersten Modus und in einem zweiten Modus betrieben werden. Modusabhängig kann ein Erfassungsbereich der Erfassungseinrichtung 3 auf den Fahrzeuginnenraum begrenzt oder über diesen hinaus ausgeweitet werden.

In Fig. 2 ist ein Kraftfahrzeug 2 gezeigt, in welchem ein Träger 6 der Virtual-Reality-Brille 2 sitzt. Die Steuereinrichtung 4 ist dazu eingerichtet, den Erfassungsbereich der Erfassungseinrichtung 3, welche in Fig. 2 nicht dargestellt ist, auf den Fahrzeuginnenraum 7 zu begrenzen, um aus einer Relativbewegung des Kraftfahrzeugs 5 zur Fahrzeugumgebung 8 resultierende Verfälschungen hinsichtlich der Erfassung der Relativbewegung der Virtual-Reality-Brille 2 zum Fahrzeuginnenraum 7 zu eliminieren, wenn die Virtual-Reality-Brille 2 im ersten Modus betrieben wird.

Die Begrenzung des Erfassungsbereichs der Erfassungseinrichtung 3 kann beispielsweise dadurch erfolgen, indem ein hier nicht dargestellter Sensor der Erfassungseinrichtung 3 verwendet wird, dessen Reichweite ohnehin auf den Fahrzeuginnenraum 7 begrenzt ist. Beispielsweise kann ein Ultraschallsensor verwendet werden, der ohnehin nur eine solche Reichweite aufweist, dass dieser den Fahrzeuginnenraum 7 erfassen kann.

Alternativ oder zusätzlich ist auch möglich, dass ein hier ebenfalls nicht dargestellter Sensor der Erfassungseinrichtung 3 verwendet wird, dessen Reichweite beispielsweise durch die Steuereinrichtung 4 auf den Fahrzeuginnenraum 7 begrenzt wird. Dieser Sensor kann beispielsweise bauartbedingt auch eine weitere Reichweite aufweisen, sodass diese theoretisch auch über den Fahrzeuginnenraum 7 hinaus Objekte und somit auch eine Relativbewegung der Virtual-Reality-Brille 2 zur Fahrzeugumgebung 8 erfassen könnte. Jedoch wird bei dem besagten Sensor zur Begrenzung des Erfassungsbereichs der Erfassungseinrichtung 3 einfach die Reichweite dieses Sensors auf den Fahrzeuginnenraum 7 begrenzt. Somit kann ein solcher Sensor im ersten Modus der Virtual-Reality-Brille 2 auch nur den Fahrzeuginnenraum 7 detektieren, sodass die Fahrzeugumgebung 8 vollständig bei der Erfassung der Relativbewegung der Virtual-Reality-Brille 2 ausgeblendet wird.

Alternativ oder zusätzlich ist es auch möglich, dass die Begrenzung des Erfassungsbereichs der Erfassungseinrichtung 3 dadurch erfolgt, indem eine hier nicht näher dargestellte Kamera der Erfassungseinrichtung 3 verwendet und dabei ein außerhalb des Fahrzeuginnenraums 7 liegender Bereich, insbesondere die Fahrzeugumgebung 8, unscharf gestellt wird. Die Kamera kann beispielsweise ein elektrisch verstellbares Objektiv aufweisen, welches mittels der Steuereinrichtung 4 angesteuert werden kann. In dem Fall kann die Steuereinrichtung 4 einfach das Objektiv derart verstellen, dass die besagte Kamera der Erfassungseinrichtung 3 schlichtweg nur den Fahrzeuginnenraum 7 scharf detektieren kann, wenn die Virtual-Reality-Brille 2 im ersten Modus betrieben wird. Auch in dem Fall kann sichergestellt werden, dass basierend auf die mittels der Erfassungseinrichtung 3 bereitgestellten Sensordaten ausschließlich eine Relativbewegung der Virtual-Reality-Brille 2 gegenüber dem Fahrzeuginnenraum 7 detektiert werden kann.

Durch die Begrenzung des Erfassungsbereichs der Erfassungseinrichtung 3 im ersten Modus kann also sichergestellt werden, dass beispielsweise bei fahrendem Kraftfahrzeug 5 an Fenstern des Kraftfahrzeugs 5 vorbeiziehende Objekte innerhalb der Fahrzeugumgebung 8, wie beispielsweise Bäume, Gebäude oder auch andere Fahrzeuge von der Erfassungseinrichtung 3 überhaupt nicht detektiert werden können. Dadurch kann es auch nicht zu Verfälschungen hinsichtlich der Erfassung der Relativbewegung der Virtual-Reality-Brille 2 zum Fahrzeuginnenraum 7 kommen, da Relativbewegungen des Kraftfahrzeugs 5 zur Fahrzeugumgebung 8 für die Erfassungseinrichtung 3 einfach unerheblich sind, da diese solche Relativbewegungen überhaupt nicht detektieren kann.

Beispielsweise kann die Virtual-Reality-Brille 2 selbst erfassen, ob das Kraftfahrzeug 5 sich fortbewegt, wobei in dem Fall der Erfassungsbereich der Erfassungseinrichtung 3 automatisch mittels der Steuereinrichtung 4 auf den Fahrzeuginnenraum 7 begrenzt wird, wenn die Virtual-Reality-Brille 2 im ersten Modus betrieben wird. Alternativ oder zusätzlich ist es auch möglich, dass der Träger 6 beispielsweise eine Taste an der Virtual-Reality-Brille 2 drücken oder irgendeine andere vorgegebene Benutzereingabe tätigen muss, um dafür zu sorgen, dass der erste Modus aktiviert und infolgedessen der Erfassungsbereich der Erfassungseinrichtung 3 auf den Fahrzeuginnenraum 7 begrenzt wird. Ferner ist es auch möglich, dass der Erfassungsbereich der Erfassungseinrichtung 3 im ersten Modus auf den Fahrzeuginnenraum 7 begrenzt wird, sobald mittels der Virtual-Reality-Brille 2 eine Applikation ausgeführt wird, welche auf eine Verwendung im Kraftfahrzeug 5 beschränkt ist. Beispielsweise kann die Virtual-Reality-Brille 2 dazu eingerichtet sein, eine Art Autokino-Applikation auszuführen, welche auf eine Verwendung im Kraftfahrzeug 5 beschränkt ist. Sobald diese Applikation ausgeführt wird, wird der Erfassungsbereich der Erfassungseinrichtung 3 automatisch auf den Fahrzeuginnenraum 7 begrenzt, wenn der erste Modus aktiviert ist.

Grundsätzlich ist es auch möglich, dass beispielsweise die Virtual-Reality-Brille 2 automatisch erfassen kann, ob diese sich im Fahrzeuginnenraum 7 befindet, wobei in dem Fall der Erfassungsbereich der Erfassungseinrichtung 3 automatisch auf den Fahrzeuginnenraum 7 begrenzt wird, wenn der erste Modus aktiviert ist. Befindet sich der Träger 6 der Virtual-Reality-Brille 2 also nicht im Fahrzeuginnenraum 7, so wird der Erfassungsbereich der Erfassungseinrichtung 3 auch nicht so eingeschränkt, dass diese nur einen Bereich von der Größe des Fahrzeuginnenraum 7 abdecken kann. Die Virtual-Reality-Brille 2 kann also selbstständig hin und her schalten und den Erfassungsbereich der Erfassungseinrichtung 3 an die entsprechende Situation anpassen, also ob sich die Virtual-Reality-Brille 2 gerade im Fahrzeuginnenraum 7 befindet oder außerhalb des Kraftfahrzeugs 5.

Wird die Virtual-Reality-Brille 2 hingegen im zweiten Modus betrieben, wird zur zusätzlichen Erfassung einer Relativbewegung der Virtual-Reality-Brille 2 zur Fahrzeugumgebung 8 der Erfassungsbereich der Erfassungseinrichtung 3 über den Fahrzeuginnenraum 7 hinaus ausgeweitet. Die virtuelle Perspektive des Trägers 6 der Virtual-Reality-Brille 2 wird infolgedessen auf den virtuellen Inhalt entsprechend der ermittelten Relativbewegung zum Fahrzeuginnenraum 7 und zur Fahrzeugumgebung 8 angepasst.

Der Träger 6 der Virtual-Reality-Brille 2 kann den zweiten Modus z.B. durch eine vorgegebene Benutzereingabe selbst aktivieren. Das kann beispielsweise über eine Taste an der Virtual-Reality-Brille 2, durch einen Sprachbefehl oder dergleichen erfolgen.

Der zweite Modus kann auch z.B. automatisch aktiviert werden, wenn dies eine bestimmte Applikation erfordert, welche mittels der Virtual-Reality-Brille 2 wiedergegeben wird. Dies können sämtliche Applikationen sein, bei welchen Relativbewegungen zum Fahrzeugumgebung 8 zusätzlich zu Relativbewegungen zum Fahrzeuginnenraum 7 erfasst werden sollen. Wird mittels der Virtual-Reality-Brille 2 z.B. eine virtuelle Raumschlacht wiedergegeben, bei welcher der Träger 6 der Virtual-Reality-Brille 2 gemeinsam mit einem weiteren Träger einer weiteren Virtual-Reality-Brille 2, der sich in einem anderen Fahrzeug befindet, interagieren kann, kann es von Vorteil sein, Informationen darüber zu erhalten, wie sich das Kraftfahrzeug 2, in dem der Träger 6 sitzt, zu dem weiteren Fahrzeug bewegt. In dem Fall ist es sinnvoll, den Erfassungsbereich auf die Fahrzeugumgebung 8 auszuweiten. So können beide Personen z.B. in einem Weltraumszenario nebeneinander her fliegen, falls sie mit ihren jeweiligen Fahrzeug nebeneinander her fahren. Biegt ein Fahrzeug in der Realität ab, sodass das sich die Wege der Fahrzeug trennen, so kann das mittels der Erfassungseinrichtung 3 im zweiten Modus erfasst und entsprechend bei der Darstellung der virtuellen Perspektive auf die virtuelle Raumschlacht umgesetzt werden.

Ebenso kann der erste Modus automatisch aktiviert werden, wenn eine Applikation mittels der Virtual-Reality-Brille 2 ausgeführt wird, bei welcher ausschließlich eine Erfassung der Relativbewegung der Virtual-Reality-Brille 2 zum Fahrzeuginnenraum 7 erforderlich ist. Dies kann beispielsweise bei der bereits erwähnten Autokino-Applikation der Fall sein. Je nach Applikation kann also der Erfassungsbereich der Erfassungseinrichtung 3 passgenau eingeschränkt oder erweitert werden.

## Patentansprüche

1. Verfahren zum Betreiben einer am Kopf tragbaren elektronischen Anzeigeeinrichtung (2), bei welchem mittels einer an der elektronischen Anzeigeeinrichtung (2) angeordneten Erfassungseinrichtung (3) eine Relativbewegung der elektronischen Anzeigeeinrichtung (2) zu einem Fahrzeuginnenraum (7) eines Fahrzeugs (5) ermittelt und entsprechend der ermittelten Relativbewegung eine virtuelle Perspektive eines Trägers (6) der elektronischen Anzeigeeinrichtung (2) auf einen virtuellen Inhalt angepasst wird, wobei
- ein Erfassungsbereich der Erfassungseinrichtung (3) auf den Fahrzeuginnenraum (7) begrenzt wird, um aus einer Relativbewegung des Fahrzeugs (5) zur Fahrzeugumgebung (8) resultierende Verfälschungen hinsichtlich der Erfassung der Relativbewegung der elektronischen Anzeigeeinrichtung (2) zum Fahrzeuginnenraum (7) zu eliminieren;
**dadurch gekennzeichnet, dass**
- die Begrenzung erfolgt, indem ein Sensor der Erfassungseinrichtung (3) verwendet wird, dessen Reichweite auf den Fahrzeuginnenraum (7) begrenzt wird, und/oder indem eine Kamera der Erfassungseinrichtung (3) verwendet und dabei ein außerhalb des Fahrzeuginnenraums (7) liegender Bereich unscharf gestellt wird, wobei die Kamera ein Objektiv aufweist, mittels welchem ab einer bestimmten Entfernung die Umgebung unscharf gestellt wird.

2. Verfahren nach einem der vorhergehenden Ansprüche, wobei mittels der elektronischen Anzeigeeinrichtung (2) erfasst wird, ob das Fahrzeug (5) sich fortbewegt, wobei in dem Fall der Erfassungsbereich der Erfassungseinrichtung (3) auf den Fahrzeuginnenraum (7) begrenzt wird.

3. Verfahren nach einem der vorhergehenden Ansprüche, wobei der Erfassungsbereich der Erfassungseinrichtung (3) auf den Fahrzeuginnenraum (7) begrenzt wird, sobald eine vorgegebene Benutzereingabe erfasst worden ist.

4. Verfahren nach einem der vorhergehenden Ansprüche, wobei der Erfassungsbereich der Erfassungseinrichtung (3) auf den Fahrzeuginnenraum (7) begrenzt wird, sobald mittels der elektronischen Anzeigeeinrichtung (2) eine Applikation ausgeführt wird, welche auf eine Verwendung im Fahrzeug (5) beschränkt ist.

5. Verfahren nach einem der vorhergehenden Ansprüche, wobei mittels der elektronischen Anzeigeeinrichtung (2) erfasst wird, ob sich die elektronische Anzeigeeinrichtung (2) im Fahrzeuginnraum (7) befindet, wobei in dem Fall der Erfassungsbereich der Erfassungseinrichtung (3) auf den Fahrzeuginnenraum (7) begrenzt wird.

6. Verfahren nach einem der vorhergehenden Ansprüche, wobei die Begrenzung des Erfassungsbereichs der Erfassungseinrichtung (3) auf den Fahrzeuginnenraum (7) nur dann erfolgt, wenn die Anzeigeeinrichtung (2) in einem ersten Modus betrieben wird, wobei wenn die Anzeigeeinrichtung (2) in einem zweiten Modus betrieben wird, zur zusätzlichen Erfassung einer Relativbewegung der elektronischen Anzeigeeinrichtung (2) zur Fahrzeugumgebung (8) der Erfassungsbereich der Erfassungseinrichtung (3) über den Fahrzeuginnenraum (7) hinaus ausgeweitet und die virtuelle Perspektive des Trägers (6) der elektronischen Anzeigeeinrichtung (2) auf den virtuellen Inhalt entsprechend der ermittelten Relativbewegung zum Fahrzeuginnenraum (7) und zur Fahrzeugumgebung (8) angepasst wird.

7. Verfahren nach Anspruch 6, wobei der Erfassungsbereich der Erfassungseinrichtung (3) über den Fahrzeuginnenraum (7) hinaus ausgeweitet wird, sobald eine vorgegebene Benutzereingabe erfasst worden ist, welche eine Aktivierung des zweiten Modus bewirkt.

8. Verfahren nach Anspruch 6 oder 7, wobei der erste Modus automatisch aktiviert wird, wenn eine Applikation mittels der elektronischen Anzeigeeinrichtung (2) ausgeführt wird, bei welcher ausschließlich eine Erfassung der Relativbewegung der elektronischen Anzeigeeinrichtung (2) zum Fahrzeuginnenraum (7) erforderlich ist.

9. Verfahren nach einem der Ansprüche 6 bis 8, wobei der zweite Modus automatisch aktiviert wird, wenn eine Applikation mittels der elektronischen Anzeigeeinrichtung (2) ausgeführt wird, bei welcher sowohl eine Erfassung der Relativbewegung der elektronischen Anzeigeeinrichtung (2) zum Fahrzeuginnenraum (7) als auch zur Fahrzeugumgebung (8) erforderlich ist.

10. Anzeigesystem (1) zum Anzeigen eines virtuellen Inhalts, mit einer am Kopf tragbaren elektronischen Anzeigeeinrichtung (2), einer an der elektronischen Anzeigeeinrichtung (2) angeordneten Erfassungseinrichtung (3), welche dazu ausgelegt ist, eine Relativbewegung der elektronischen Anzeigeeinrichtung (2) zu einem Fahrzeuginnenraum (7) eines Fahrzeugs (5) zu ermitteln, und mit einer Steuereinrichtung (4), welche dazu eingerichtet ist, entsprechend der ermittelten Relativbewegung eine virtuelle Perspektive eines Trägers (6) der elektronischen Anzeigeeinrichtung (2) auf den virtuellen Inhalt anzupassen, wobei die Steuereinrichtung (4) dazu eingerichtet ist,
- einen Erfassungsbereich der Erfassungseinrichtung (3) auf den Fahrzeuginnenraum (7) zu begrenzen, um aus einer Relativbewegung des Fahrzeugs (5) zur Fahrzeugumgebung (8) resultierende Verfälschungen hinsichtlich der Erfassung der Relativbewegung der elektronischen Anzeigeeinrichtung (2) zum Fahrzeuginnenraum (7) zu eliminieren;
**dadurch gekennzeichnet, dass**
der Erfassungsbereich der Erfassungseinrichtung (3) begrenzt ist, indem ein Sensor der Erfassungseinrichtung (3) verwendet wird, dessen Reichweite auf den Fahrzeuginnenraum (7) begrenzt wird, und/oder indem eine Kamera der Erfassungseinrichtung (3) verwendet und dabei ein außerhalb des Fahrzeuginnenraums (7) liegender Bereich unscharf gestellt wird, wobei die Kamera ein Objektiv aufweist, welches dazu ausgelegt ist, ab einer bestimmten Entfernung die Umgebung unscharf zu stellen.

11. Anzeigesystem (1) nach Anspruch 10, wobei die elektronische Anzeigeeinrichtung (2) eine Virtual-Reality-Brille oder eine Augmented-Reality-Brille ist.

## Claims

1. Method for operating a head-wearable electronic display device (2), in which a movement of the electronic display device (2) relative to a vehicle interior (7) of a vehicle (5) is determined by means of a detection device (3) arranged on the electronic display device (2), and a virtual perspective of a wearer (6) of the electronic display device (2) on a virtual content is adapted in accordance with the determined relative movement, wherein
- a detection range of the detection device (3) is limited to the vehicle interior (7), in order to eliminate, with regard to the detection of the movement of the electronic display device (2) relative to the vehicle interior (7), distortions resulting from movement of the vehicle (5) relative to the vehicle surroundings (8);
**characterised in that**
- the limitation is effected by using a sensor of the detection device (3), the range of which is limited to the vehicle interior (7), and/or by using a camera of the detection device (3) and thereby blurring an area lying outside the vehicle interior (7), the camera having a lens by means of which the surroundings beyond a certain distance are blurred.

2. Method according to any one of the preceding claims, wherein it is detected by means of the electronic display device (2) whether the vehicle (5) is moving, in which case the detection range of the detection device (3) is limited to the vehicle interior (7).

3. Method according to any one of the preceding claims, wherein the detection range of the detection device (3) is limited to the vehicle interior (7) as soon as a predefined user input is detected.

4. Method according to any one of the preceding claims, wherein the detection range of the detection device (3) is limited to the vehicle interior (7) as soon as an application is executed by means of the display device (2), which application is restricted to use within the vehicle (5).

5. Method according to any one of the preceding claims, wherein it is ascertained by means of the electronic display device (2) whether the electronic display device (2) is located within the vehicle interior (7), in which case the detection range of the detection device (3) is limited to the vehicle interior (7).

6. Method according to any one of the preceding claims, wherein the limitation of the detection range of the detection device (3) to the vehicle interior (7) only takes place when the display device (2) is operated in a first mode, wherein when the display device (2) is operated in a second mode the detection range of the detection device (3) is extended beyond the vehicle interior (7) for the additional detection of a movement of the electronic display device (2) relative to the vehicle surroundings (8), and the virtual perspective of the wearer (6) of the electronic display device (2) on the virtual content is adapted in accordance with the determined movement relative to the vehicle interior (7) and to the vehicle surroundings (8).

7. Method according to claim 6, wherein the detection range of the detection device (3) is extended beyond the vehicle interior (7), as soon as a predefined user input has been detected, which effects activation of the second mode.

8. Method according to claim 6 or 7, wherein the first mode is automatically activated, when an application is executed by means of the electronic display device (2), in which exclusively detection of the movement of the electronic display device (2) relative to the vehicle interior (7) is required.

9. Method according to any one of claims 6 to 8, wherein the second mode is automatically activated, when an application is executed by means of the electronic display device (2), in which detection of the movement of the electronic display device (2) both relative to the vehicle interior (7) and relative to the vehicle surroundings (8) is required.

10. Display system (1) for displaying virtual content, comprising a head-wearable electronic display device (2), a detection device (3) arranged on the electronic display device (2), which is adapted to determine a movement of the electronic display device (2) relative to a vehicle interior (7) of a vehicle (5), and comprising a control apparatus (4), which is adapted to adapt a virtual perspective of a wearer (6) of the electronic display device (2) to the virtual content in accordance with the determined relative movement, wherein the control apparatus (4) is adapted
- to limit a detection range of the detection device (3) to the vehicle interior (7), in order to eliminate, with regard to the detection of the movement of the electronic display device (2) relative to the vehicle interior (7), distortions resulting from movement of the vehicle (5) relative to the vehicle surroundings (8);
**characterised in that**
- the detection range of the detection device (3) is limited by using a sensor of the detection device (3), the range of which is limited to the vehicle interior (7), and/or by using a camera of the detection device (3) and thereby blurring an area lying outside the vehicle interior (7), the camera having a lens which is adapted to blur the surroundings beyond a certain distance.

11. Display system (1) according to claim 10, wherein the electronic display device (2) is a virtual reality headset or an augmented reality headset.

## Revendications

1. Procédé de fonctionnement d'un dispositif d'affichage électronique portable sur la tête (2), dans lequel un mouvement relatif du dispositif d'affichage électronique (2) par rapport à un habitacle de véhicule (7) d'un véhicule (5) est déterminé au moyen d'un dispositif de détection (3) disposé sur le dispositif d'affichage électronique (2) et une perspective virtuelle d'un porteur (6) du dispositif d'affichage électronique (2) est adaptée à un contenu virtuel en fonction du mouvement relatif déterminé, dans lequel
- une zone de détection du dispositif de détection (3) est limitée à l'habitacle du véhicule (7) pour éliminer des falsifications résultant d'un mouvement relatif du véhicule (5) par rapport à l'environnement de véhicule (8) concernant la détection du mouvement relatif du dispositif d'affichage électronique (2) par rapport à l'habitacle de véhicule (7) ;
**caractérisé en ce que**
- la délimitation s'effectue en utilisant un capteur du dispositif de détection (3), dont la plage est limitée à l'habitacle de véhicule (7), et/ou en utilisant une caméra du dispositif de détection (3) et une zone située à l'extérieur de l'habitacle de véhicule (7) est ainsi floutée, dans lequel la caméra présente un objectif au moyen duquel l'environnement est flouté à partir d'un certain éloignement.

2. Procédé selon l'une quelconque des revendications précédentes, dans lequel est détecté au moyen du dispositif d'affichage électronique (2) si le véhicule (5) se déplace, auquel cas la zone de détection du dispositif de détection (3) est limitée à l'habitacle de véhicule (7).

3. Procédé selon l'une quelconque des revendications précédentes, dans lequel la zone de détection du dispositif de détection (3) est limitée à l'habitacle de véhicule (7) dès qu'une entrée utilisateur prédéterminée a été détectée.

4. Procédé selon l'une quelconque des revendications précédentes, dans lequel la zone de détection du dispositif de détection (3) est limitée à l'habitacle de véhicule (7) dès qu'une application est exécutée au moyen du dispositif d'affichage électronique (2) dont l'utilisation est limitée au véhicule (5).

5. Procédé selon l'une quelconque des revendications précédentes, dans lequel est détecté au moyen du dispositif d'affichage électronique (2) si le dispositif d'affichage électronique (2) se trouve dans l'habitacle de véhicule (7), auquel cas la zone de détection du dispositif de détection (3) est limitée à l'habitacle de véhicule (7).

6. Procédé selon l'une quelconque des revendications précédentes, dans lequel la limitation de la zone de détection du dispositif de détection (3) sur l'habitacle de véhicule (7) s'effectue uniquement lorsque le dispositif d'affichage (2) est exploité dans un premier mode, dans lequel lorsque le dispositif d'affichage (2) est exploité dans un second mode, la zone de détection du dispositif de détection (3) est étendue au-delà de l'habitacle de véhicule (7) afin de détecter en plus un mouvement relatif du dispositif d'affichage électronique (2) par rapport à l'environnement de véhicule (8), et la perspective virtuelle du porteur (6) du dispositif d'affichage électronique (2) sur le contenu virtuel est adaptée conformément au mouvement relatif détecté par rapport à l'habitacle de véhicule (7) et à l'environnement de véhicule (8).

7. Procédé selon la revendication 6, dans lequel la zone de détection du dispositif de détection (3) est étendue au-delà de l'habitacle de véhicule (7) dès qu'une entrée utilisateur prédéterminée a été détectée, qui provoque l'activation du second mode.

8. Procédé selon la revendication 6 ou 7, dans lequel le premier mode est automatiquement activé lorsqu'une application est exécutée au moyen du dispositif d'affichage électronique (2), dans laquelle exclusivement une détection du mouvement relatif du dispositif d'affichage électronique (2) par rapport à l'habitacle de véhicule (7) est requise.

9. Procédé selon l'une quelconque des revendications 6 à 8, dans lequel le second mode est automatiquement activé lorsqu'une application est exécutée au moyen du dispositif d'affichage électronique (2), dans laquelle une détection du mouvement relatif du dispositif d'affichage électronique (2) par rapport à l'habitacle de véhicule (7) ainsi qu'à l'environnement de véhicule (8) est requise.

10. Système d'affichage (1) pour afficher un contenu virtuel, avec un dispositif d'affichage électronique portable sur la tête (2), un dispositif de détection (3) disposé sur le dispositif d'affichage électronique (2) et conçu pour détecter un mouvement relatif du dispositif d'affichage électronique (2) par rapport à un habitacle de véhicule (7) d'un véhicule (5) et avec un dispositif de commande (4) qui est configuré pour adapter une perspective virtuelle d'un porteur (6) du dispositif d'affichage électronique (2) au contenu virtuel en fonction du mouvement relatif déterminé dans lequel le dispositif de commande (4) est configuré
- pour limiter une zone de détection du dispositif de détection (3) à l'habitacle du véhicule (7), pour éliminer des falsifications résultant d'un mouvement relatif du véhicule (5) par rapport à l'environnement de véhicule (8) concernant la détection du mouvement relatif du dispositif d'affichage électronique (2) par rapport à l'habitacle de véhicule (7) ;
**caractérisé en ce que**
- la zone de détection du dispositif de détection (3) est limitée en utilisant un capteur du dispositif de détection (3), dont la plage est limitée à l'habitacle de véhicule (7), et/ou en utilisant une caméra du dispositif de détection (3) et une zone située à l'extérieur de l'habitacle de véhicule (7) est ainsi floutée, dans lequel la caméra présente un objectif, lequel est conçu pour flouter l'environnement à partir d'un certain éloignement.

11. Système d'affichage (1) selon la revendication 10, dans lequel le dispositif d'affichage électronique (2) est une paire de lunettes de réalité virtuelle ou une paire de lunettes de réalité augmentée.
